# EUROPÄISCHE PATENTSCHRIFT

(11) **EP 3 365 205 B1**
(45) Veröffentlichungstag und Bekanntmachung des Hinweises auf die Patenterteilung: **15.06.2022**
(21) Anmeldenummer: 16753829.7
(22) Anmeldetag: 19.08.2016
(51) Int. Cl.: B60T 8/24, B60T 8/18

(54) **VERFAHREN ZUR ANSTEUERUNG VON BREMSEN**
METHOD FOR CONTROLLING BRAKES
PROCÉDÉ DE COMMANDE DE FREINS

(30) Priorität: 23.10.2015 DE 102015013761
(43) Veröffentlichungstag der Anmeldung: 29.08.2018
(73) Patentinhaber: ZF CV Systems Europe BV, 1170 Brussels (BE)
(72) Erfinder: CZAJA, Daniel, 30419 Hannover (DE); DIERS, Hauke, 31275 Lehrte (DE); STENDER, Axel, 31787 Hameln (DE)
(74) Vertreter: Koschnitzki, Thomas
(86) Internationale Anmeldenummer: PCT/EP2016/001411
(87) Internationale Veröffentlichungsnummer: WO 2017/067622

(56) Entgegenhaltungen:
- EP-A2- 1 142 768
- GB-A- 2 499 438
- JP-A- 2000 043 695
- US-A1- 2003 225 499
- US-A1- 2005 060 082
- US-A1- 2014 214 299

## Beschreibung

Die Erfindung betrifft ein Verfahren zur automatischen Ansteuerung von Bremsen in Anhängefahrzeugen mit Antiblockierregelung, insbesondere zum Schutz gegen Umkippen, wobei Raddrehzahlen an Rädern mit Antiblockierregelung kontinuierlich überwacht und ausgewertet werden.

Nutzfahrzeuge sind typischerweise mit einer pneumatischen Bremsanlage und einem elektronischen Bremssystem ausgestattet. Das heißt, vom Fahrer wird ein Bremssignal elektronisch an ein Steuergerät übermittelt. Letzteres regelt Ventile, mit denen Bremsdruck in Fahrzeugbremsen eingesteuert wird. Dem Steuergerät sind allerlei Sensoren und Zusatzfunktionen zugeordnet. Unter anderem kann eine Stabilitätskontrolle vorgesehen sein, nämlich eine Kontrolle gegen Umkippen aufgrund zu schneller Kurvenfahrt. Die Kombination aus pneumatischer Bremsanlage und elektronischem Bremssystem ist auch für Anhängefahrzeuge bekannt.

Die Schriften US 2014/0214299 A1 und GB 2499438 A offenbaren Verfahren zur Stabilitätskontrolle eines Fahrzeuggespanns bestehend aus Zugfahrzeug und Anhängefahrzeug.

In elektronischen Bremssystemen wird zur Verifizierung der Umkippgefahr ein geringer Testbremsdruck auf der kurveninneren Fahrzeugseite eingesteuert. Wenn dieser geringe Testbremsdruck ausreicht, um Räder auf der kurveninneren Fahrzeugseite zu blockieren, wird davon ausgegangen, dass die kurveninnere Fahrzeugseite stark entlastet ist und eine Umkippgefahr besteht. Das Fahrzeug wird dann automatisch voll eingebremst, um die Geschwindigkeit zu reduzieren und so das Umkippen zu verhindern. Der Testbremsdruck wird dabei in Abhängigkeit von einer Beladung berechnet, so dass die kurveninneren Räder bei ca. 90 % Entlastung blockieren, ausgehend von einem relativ hohem Reibwert zwischen Reifen und Straße. Erforderlich sind hierzu die Erfassung der Achslasten durch Sensoren und eine relativ genaue Dosierung des Testbremsdrucks. Beides ist typischerweise für einfache Bremsanlagen ohne elektronisches Bremssystem nicht vorgesehen.

Vorläufer des elektronischen Bremssystems war die sogenannte Antiblockierregelung ohne eine elektronische Übermittlung des Bremssignals vom Fahrer zum Steuergerät. Das Steuergerät hatte nur die Aufgabe Signale der Raddrehzahlsensoren zu überwachen und den wirksamen Bremsdruck für blockierende Räder zu vermindern. Anhängefahrzeuge mit Antiblockierregelung und ohne elektronisches Bremssystem sind weiterhin weit verbreitet.

Aufgabe der vorliegenden Erfindung ist die Schaffung eines Verfahrens, mit dem Anhängefahrzeuge mit Antiblockierregelung, insbesondere auch ohne elektronisches Bremssystem, gegen das Umkippen in zu schnell gefahrenen Kurven geschützt werden können.

Die Merkmale des erfindungsgemäßen Verfahrens ergeben sich aus Anspruch 1. Insbesondere sind folgende Schritte vorgesehen:
a) Überwachung einer Querbeschleunigung a_{Q} und einer Längsbeschleunigung a_{L} des Fahrzeugs,
b) bei Überschreiten einer vordefinierten, kritischen Querbeschleunigung a_{Qkrit} in einer Kurve erfolgt ein automatischer Bremsvorgang mit folgendem Ablauf:
   b1) - erhöhen eines Bremsdrucks auf einer kurveninneren Fahrzeugseite in kleinen Schritten von insbesondere 0,1 - 0,2 bar,
   b2) - in jedem Schritt prüfen, ob eine Grenz-Längsverzögerung a_{Lkipp} erreicht wird,
   b3) - in jedem Schritt prüfen, ob kurveninnere Räder blockieren oder die Antiblockierregelung für kurveninnere Räder eingreift,
      b31) - wenn kurveninnere Räder blockieren oder die Antiblockierregelung für kurveninnere Räder eingreift, bevor a_{Lkipp} erreicht wird, dann startet eine Verzögerungsbremsung zumindest auf einer kurvenäußeren Fahrzeugseite,
      b32) - wenn jedoch a_{Lkipp} erreicht wird, ohne dass kurveninnere Räder blockieren oder für kurveninnere Räder die Antiblockierregelung eingreift, dann wird der Bremsvorgang abgebrochen.

Die Querbeschleunigung wird vorzugsweise ständig überwacht durch Ermittlung und Vergleich derselben mit der kritischen Querbeschleunigung in sehr kurzen zeitlichen Abständen. Die Längsbeschleunigung wird vorzugsweise nur ermittelt, wenn die kritische Querbeschleunigung überschritten ist, kann aber auch unabhängig davon ermittelt werden.

Zur Ermittlung der Querbeschleunigung kann für die Antiblockierregelung ein Steuergerät mit Querbeschleunigungssensor vorgesehen sein. Die Längsbeschleunigung kann aus den Signalen der Raddrehzahlsensoren in bekannter Weise ermittelt werden. Alternativ kann zur Erfassung der Längsbeschleunigung ein Längsbeschleunigungssensor vorgesehen sein. In diesem Fall werden vorzugsweise ein Gefälle oder eine Steigung einer Fahrbahn vor Beginn des Bremsvorgangs erfasst und beim Bremsvorgang herausgerechnet.

Sobald eine Querbeschleunigung vorliegt, wird von einer Kurvenfahrt ausgegangen. Die Querbeschleunigung weist stets nach außen, also gegen eine kurveninnere Richtung.

Die kritische Querbeschleunigung a_{QKRIT} wird aus dem Fahrzeugaufbau berechnet und/oder aus Erfahrungswerten festgelegt. Analog ist ein Grenzwert a_{LKIPP} für eine Längsverzögerung aus Erfahrungswerten festgelegt oder aus dem Fahrzeugaufbau ermittelt. Ziel ist eine Grenz-Längsverzögerung a_{LKIPP} derart, dass auf Umkippgefahr erkannt wird, wenn eine Achslast auf der kurveninneren Seite weniger als 10% der maximalen Achslast an dieser Stelle beträgt. Ausgehend von einem Lastzug mit Zugfahrzeug und Auflieger mit beispielsweise 4 und 6 Rädern, sollen die 3 kurveninneren Räder des Aufliegers den Lastzug um etwa 2,4 % abbremsen. Dabei handelt es sich um den prozentualen Wert der Bremskraft bezogen auf die Radlast. Das heißt, a_{Lkipp} soll etwa 2,4 % betragen. Für einen Lastzug mit mehr Rädern am Zugfahrzeug und weniger Rädern am Auflieger (6+4 statt 4+6) ergibt sich mit 1,6 % ein niedrigerer Wert für a_{Lkipp}. Vorzugsweise soll a_{Lkipp} zwischen 1,5 % und 3 % liegen.

Ein besonderer Vorteil des erfindungsgemäßen Verfahrens liegt darin, dass eine zusätzliche Sensierung der Beladung bzw. der Achslasten nicht notwendig ist und so das Verfahren auch für konventionelle Fahrzeuge mit Antiblockierregelung und ohne elektronisches Bremssystem angewendet werden kann. Außerdem ist das Verfahren anwendbar für Fahrzeuge mit elektronischem Bremssystem aber ohne Beladungssensoren. Schließlich kann das Verfahren auch in Fahrzeugen mit Beladungssensoren zum Einsatz kommen, wenn die Signale der Beladungssensoren ausfallen oder nicht genutzt werden sollen.

Nach einem weiteren Gedanken der Erfindung ist vorgesehen, dass eine gemäß Schritt b.3.1. begonnene Verzögerungsbremsung abgebrochen wird, sobald die Querbeschleunigung a_{Q} kleiner ist als eine kritische Querbeschleunigung a_{QKRIT}. Die Kippgefahr ist dann beseitigt. Die Verzögerungsbremsung muss nicht weiter durchgeführt werden. Anschließend beginnt der gesamte Zyklus von vorn mit Überwachung der Querbeschleunigung a_{Q} und der Längsbeschleunigung a_{L}.

Nach einem weiteren Gedanken der Erfindung ist vorgesehen, dass nach dem Abbrechen des Bremsvorgangs gemäß Schritt b.3.2. der automatische Bremsvorgang gemäß b erst dann erneut eingeleitet wird,
- wenn die Querbeschleunigung a_{Q} weiter angestiegen ist und um einen definierten Betrag über der kritischen Querbeschleunigung a_{QKRIT} liegt,
- oder wenn das Fahrzeug eine definierte Distanz seit dem letzten Bremsvorgang gemäß b zurückgelegt hat und die Querbeschleunigung a_{Q} noch immer größer ist als die kritische Querbeschleunigung a_{QKRIT}.

Der Bremsdruck wird auf der kurveninneren Fahrzeugseite stufenweise erhöht. Während jeder Stufe wird ein Bremsdruck über eine definierte Zeitspanne eingesteuert. Diese Zeitspanne wird als Einsteuerzeit des Bremsdruckes zum Aufpulsen bezeichnet und liegt vorzugsweise bei etwa fünf bis zehn Millisekunden. Die Zeitspanne wird aus Parametern des Fahrzeugaufbaus ermittelt oder aufgrund von Erfahrungswerten festgelegt.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:

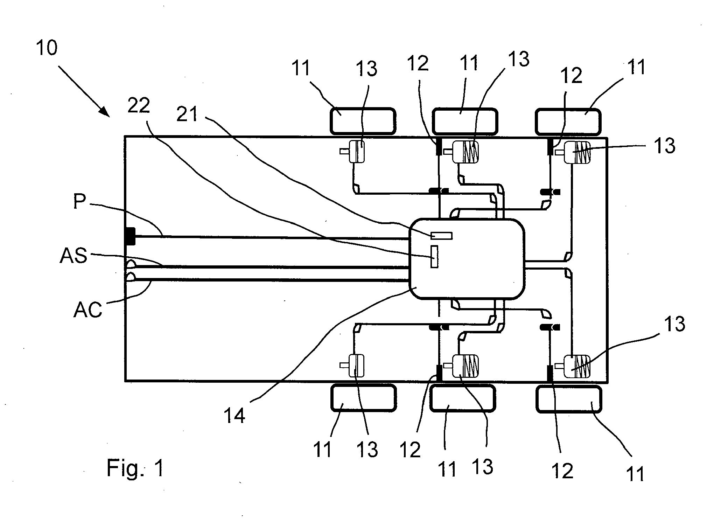

Figur 1 die schematische Darstellung einer pneumatischen Bremsanlage eines Anhängefahrzeugs (Auflieger) mit drei Achsen,
Figur 2 das Anhängefahrzeug in Rückansicht mit Darstellung der Kräfte in einer Linkskurve,

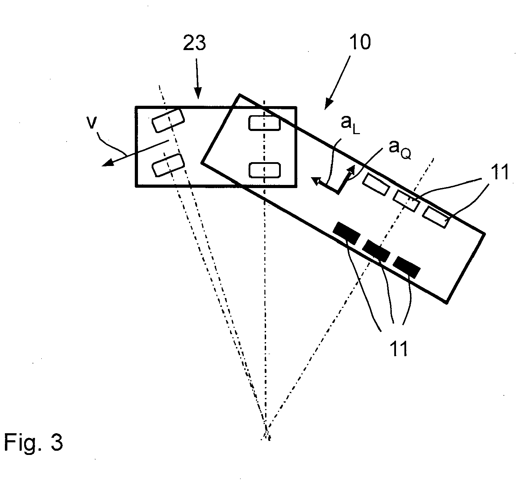

Figur 3 eine schematische Draufsicht auf das Anhängefahrzeug mit Zugmaschine bei Fahrt durch eine Linkskurve.

Ein Anhängefahrzeug 10 nach Art eines Aufliegers weist eine pneumatische Bremsanlage mit Antiblockierfunktion auf. An vier von sechs Rädern 11 (zwei von drei Achsen) sind Raddrehzahlsensoren 12 vorgesehen. Die Funktion von Bremszylindern 13 ist durch ein Steuergerät 14 regelbar. An das Steuergerät 14 angeschlossen sind eine elektrische Leitung P, eine pneumatische Druckleitung AS und eine pneumatische Steuerleitung AC.

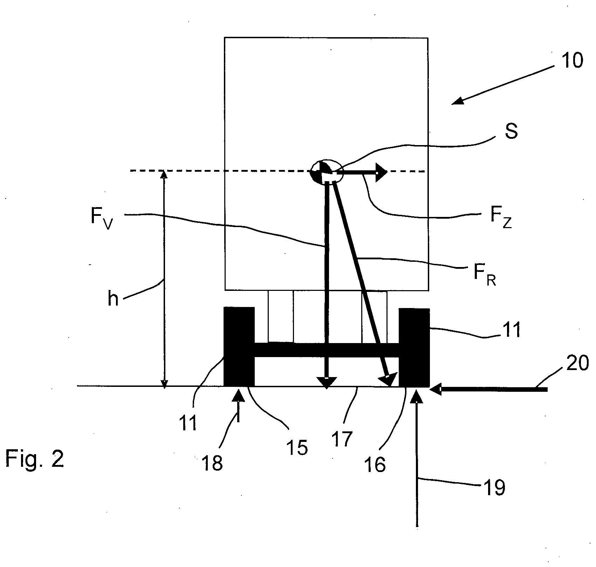

Bei schneller Kurvenfahrt und/oder relativ hohem Schwerpunkt S des Anhängefahrzeugs 10 besteht die Gefahr des Umkippens. Ausgehend von einer Höhe h bzw. einer Lage des Schwerpunkts S, einer Zentrifugalkraft F_{Z} und einer ladungsabhängigen, vertikal gerichteten Gewichtskraft F_{V} ergibt sich eine resultierende Kraft F_{R}, siehe Figur 2. Entsprechende Kräfte stellen sich im Bereich von Kontaktflächen 15, 16 zwischen Rädern 11 und Fahrbahn 17 ein, siehe Pfeile 18 (Aufstandskraft links), 19 (Aufstandskraft rechts) und 20 (Seitenführungskraft). Erkennbar ist, dass bei größer werdender Zentrifugalkraft F_{Z} die resultierende Kraft F_{R} immer weiter von der Vertikalkraft F_{V} abweicht und entsprechend die Aufstandskraft links (Pfeil 18) kleiner wird. Im Extremfall ändert die Aufstandskraft links ihr Vorzeichen und das Anhängefahrzeug 10 kippt um.

Zur Vermeidung des Umkippens bei Kurvenfahrt werden fortlaufend eine Längsbeschleunigung a_{L} und eine Querbeschleunigung a_{Q} durch insbesondere im Steuergerät 14 angeordnete Sensoren 21, 22 detektiert. Alternativ oder zusätzlich kann die Querbeschleunigung a_{Q} aus den unterschiedlichen Drehzahlen der kurveninneren und kurvenäußeren Räder 11 bestimmt werden. Analog kann die Längsbeschleunigung a_{L} alternativ oder zusätzlich aus der Änderung der Raddrehzahlen ermittelt werden.

Ein Fahrzeuggespann aus Zugfahrzeug 23 und Anhängefahrzeug 10 fährt beispielsweise mit einer Geschwindigkeit von v=60 km/h in eine Kurve. Die Fahrzeugquerbeschleunigung a_{Q} wird laufend überwacht, ebenso die Fahrzeuglängsbeschleunigung a_{L}. Aus dem Fahrzeugaufbau und/oder aus Erfahrungswerten festgelegt ist eine kippkritische Querbeschleunigung a_{QKRIT}. Analog ist ein Grenzwert a_{LKIPP} für eine Längsverzögerung aus Erfahrungswerten festgelegt oder aus dem Fahrzeugaufbau ermittelt. Hier soll gelten:
a_{QKRIT} = 3 m/s²
a_{LKIPP} = 0,24 m/s² (oder 0,16 m/s² für Auflieger mit zwei Achsen, wie in Nordamerika).

Bei Überschreitung der kippkritischen Querbeschleunigung a_{QKRIT} wird ein automatischer Bremsvorgang ausgelöst. Dieser besteht aus Testbremsungen mit stufenweise größer werdendem Bremsdruck. Der Bremsdruck wird in Pulsen in die Bremszylinder eingesteuert. Für jeden Puls wird vorzugsweise eine Zeitdauer von etwa fünf bis zehn Millisekunden angesetzt. Andere Werte können sich aus dem Fahrzeugaufbau und den Reaktionszeiten der am Bremsvorgang beteiligten Bauteile ergeben. Je nach Lenkwinkel und Schwerpunkt bei vorgegebener Geschwindigkeit v von 60 km/h können sich folgende Abläufe ergeben:

### Ablauf 1

Das Steuergerät 14 stellt eine Querbeschleunigung a_{Q} von mehr als 3 m/s² fest. Damit ist die kippkritische Querbeschleunigung a_{QKRIT} überschritten. Der automatische Bremsvorgang wird ausgelöst und der Bremsdruck auf der kurveninneren Seite (Kontaktfläche 15 und Pfeil 18 in Figur 2) wird in definierten Schritten erhöht, insbesondere in etwa 0,1 bar-Schritten. In üblichen Antiblockierregelungen kann die Erhöhung des Bremsdruckes gesteuert werden über Ansteuerzeiten von Einlassmagneten an Steuerventilen. Zugleich wird die Längsbeschleunigung a_{L} überwacht. In diesem Fall wird eine negative Längsbeschleunigung a_{L} festgestellt, deren Betrag größer ist als die vorgegebene Grenz-Längsverzögerung a_{LKIPP}. Das heißt, durch den automatischen Bremsvorgang der kurveninneren Räder verzögert das Anhängefahrzeug stärker als die Grenz-Längsverzögerung a_{LKIPP} vorgibt. Die kurveninneren Räder blockieren nicht. Somit haben die abgebremsten Räder auf der kurveninneren Seite noch genügend Aufstandskraft. Es besteht keine Gefahr des Umkippens. Der automatische Bremsvorgang wird abgebrochen. Die zuletzt gemessene oder errechnete Querbeschleunigung a_{Q} wird aber bis auf Weiteres gespeichert.

Sollte sich die Querbeschleunigung a_{Q} weiter erhöhen, etwa um eine definierte Differenz oder um 5% bis 10%, findet wieder ein automatischer Bremsvorgang statt.

### Ablauf 2

Wie in Ablauf 1 liegt die gemessene oder berechnete Querbeschleunigung a_{Q} über der kritischen Querbeschleunigung a_{QKRIT}. Bremsdruck wird in vorzugsweise 0,1 bar-Schritten auf der kurveninneren Seite aufgepulst. Im Gegensatz zu Ablauf 1 wird nun eine deutlich geringere negative Längsbeschleunigung a_{L} während des automatischen Bremsvorgangs gemessen oder berechnet. Der Betrag der Längsbeschleunigung a_{L} ist somit kleiner als der Grenzwert a_{LKIPP} von 0,24 m/s². Dieser Fall kann zum Beispiel auftreten, wenn das Fahrzeug einen höher liegenden Schwerpunkt als in Ablauf 1 aufweist. Die Haftung der kurveninneren Räder auf dem Straßenbelag ist nur noch gering. Die kurveninneren Räder haben nicht genügend Aufstandskraft und blockieren oder für die kurveninneren Räder greift eine Antiblockierregelung ein. Als Folge wird eine Verzögerungsbremsung für das Anhängefahrzeug 10 eingeleitet, zumindest für die kurvenäußeren Räder, insbesondere für alle Räder. Durch die Verzögerungsbremsung wird die Querbeschleunigung a_{Q} bis unter die kritische Querbeschleunigung a_{QKRIT} verringert. Anschließend wird der Bremsvorgang abgebrochen, da das Fahrzeug wieder stabil ist. Das Verfahren kann von neuem beginnen, je nach ermittelter Querbeschleunigung a_{Q}.

### Ablauf 3

Die gemessene/berechnete Querbeschleunigung a_{Q} des Fahrzeugs liegt unter der kritischen Querbeschleunigung a_{QKRIT} von 3 m/s². Dieser Fall kann auftreten in Kurven mit größerem Radius oder bei sehr niedrigem Schwerpunkt des Fahrzeugs. Es findet kein automatischer Bremsvorgang statt.

## Patentansprüche

1. Verfahren zur automatischen Ansteuerung von Bremsen in Anhängefahrzeugen (10) mit Antiblockierregelung, insbesondere zum Schutz gegen Umkippen, wobei Raddrehzahlen an Rädern (11) mit Antiblockierregelung kontinuierlich überwacht und ausgewertet werden, **gekennzeichnet durch** folgende Merkmale:
a) Ermittlung einer Querbeschleunigung ao und einer Längsbeschleunigung a_{L} des Fahrzeugs (10),
b) bei Überschreiten einer vordefinierten, kritischen Querbeschleunigung a_{Qkrit} erfolgt ein automatischer Bremsvorgang mit folgendem Ablauf:
b1) - erhöhen eines Bremsdrucks auf einer kurveninneren Fahrzeugseite in kleinen Schritten von insbesondere 0,1 - 0,2 bar,
b2) - in jedem Schritt prüfen, ob eine Grenz-Längsverzögerung a_{Lkipp} erreicht wird,
b3) - in jedem Schritt prüfen, ob kurveninnere Räder (11) blockieren oder die Antiblockierregelung für kurveninnere Räder (11) eingreift,
b31) - wenn kurveninnere Räder (11) blockieren oder die Antiblockierregelung für kurveninnere Räder (11) eingreift, bevor a_{Lkipp} erreicht wird, dann startet eine Verzögerungsbremsung zumindest auf einer kurvenäußeren Fahrzeugseite,
b32) - wenn jedoch a_{Lkipp} erreicht wird, ohne dass kurveninnere Räder (11) blockieren oder für kurveninnere Räder (11) die Antiblockierregelung eingreift, dann wird der Bremsvorgang abgebrochen.

2. Verfahren nach Anspruch 1, **dadurch gekennzeichnet, dass** eine gemäß Schritt b.3.1. begonnene Verzögerungsbremsung abgebrochen wird, sobald die Querbeschleunigung ao kleiner ist als eine kritische Querbeschleunigung a_{QKRIT}.

3. Verfahren nach Anspruch 1 oder 2, **dadurch gekennzeichnet, dass** nach dem Abbrechen des Bremsvorgangs gemäß Schritt b.3.2. der automatische Bremsvorgang gemäß b erst dann erneut eingeleitet wird,
- wenn die Querbeschleunigung ao weiter angestiegen ist und um einen definierten Betrag über der kritischen Querbeschleunigung a_{QKRIT} liegt,
- oder wenn das Fahrzeug (10) eine definierte Distanz seit dem letzten Bremsvorgang gemäß b zurückgelegt hat und die Querbeschleunigung ao noch größer ist als die kritische Querbeschleunigung a_{QKRIT}.

## Claims

1. A method for the automatic actuation of brakes in a trailer vehicle (10) with antilock control, in particular for protection from overturning, wherein wheel revolution rates on wheels (11) with antilock control are continuously monitored and analyzed by the trailer vehicle, **characterized by** the following features:
a) determining a lateral acceleration a_{Q} and a longitudinal acceleration a_{L} of the vehicle (10),
b) on exceeding a predefined, critical lateral acceleration a_{Qkrit}, carrying out an automatic braking process comprising:
b1) - increasing a brake pressure on a side of the trailer vehicle on an inside of a turn in small steps of in particular 0.1 - 0.2 bar,
b2) - checking in each step whether a longitudinal acceleration limit a_{Lkipp} is reached,
b3) - checking in each step whether wheels (11) on the inside of the turn lock or the antilock control engages for wheels (11) on the inside of the turn, wherein
b31) - if wheels (11) on the inside of the turn lock or the antilock control engages for wheels (11) on the inside of the turn before a_{Lkipp} is reached, the method further comprises starting deceleration braking at least on a side of the trailer vehicle on an outside of the turn,
b32) - if a_{Lkipp} is reached without wheels (11) on the inside of the turn locking or the antilock control engaging for wheels (11) on the inside of the turn, the method further comprises terminating the braking process.

2. The method according to claim 1, **characterized in that** deceleration braking according to step b.3.1. is terminated once the lateral acceleration a_{Q} is less than a critical lateral acceleration a_{QKRIT}.

3. The method according to claim 1 or 2, **characterized in that** after terminating the braking process according to step b.3.2., the automatic braking process is only initiated again according to b,
- if the lateral acceleration a_{Q} has continued to increase and exceeds the critical lateral acceleration a_{QKRIT} by a defined magnitude, or
- if the vehicle (10) has travelled a defined distance since the last braking process according to b and the lateral acceleration a_{Q} is still greater than the critical lateral acceleration a_{QKRIT}.

## Revendications

1. Procédé pour la commande automatique de freins dans des véhicules tractés (10) à régulation antiblocage, en particulier pour une protection contre le renversement, dans lequel des vitesses de rotation de roues sont surveillées de manière continue sur des roues (11) à régulation antiblocage et évaluées, **caractérisé par** les caractéristiques suivantes :
a) la détermination d'une accélération transversale a_{Q} et d'une accélération longitudinale a_{L} du véhicule (10),
b) lors du dépassement d'une accélération transversale critique a_{Qkrit} prédéfinie, il s'effectue un processus de freinage automatique avec le déroulement suivant :
b1) - l'augmentation d'une pression de freinage sur un côté de véhicule intérieur au virage par petites étapes d'en particulier 0,1 - 0,2 bar,
b2) - le fait de vérifier à chaque étape si une accélération longitudinale limite a_{Lkipp} est atteinte,
b3) - le fait de vérifier à chaque étape si les roues (11) intérieures au virage se bloquent ou si la régulation antiblocage intervient pour les roues (11) intérieures au virage,
b31) - lorsque les roues (11) intérieures au virage se bloquent ou que la régulation antiblocage intervient pour les roues (11) intérieures au virage, avant que a_{Lkipp} ne soit atteinte, un freinage de décélération commence alors au moins sur un côté de véhicule extérieur au virage,
b32) - lorsque cependant a_{Lkipp} est atteinte, sans que les roues (11) intérieures au virage se bloquent ou que la régulation antiblocage intervienne pour les roues (11) intérieures au virage, le processus de freinage est alors interrompu.

2. Procédé selon la revendication 1, **caractérisé en ce qu'**un freinage de décélération commencé conformément à l'étape b3.1. est interrompu, dès que l'accélération transversale a_{Q} est inférieure à une accélération transversale critique a_{QKRIT}.

3. Procédé selon la revendication 1 ou 2, **caractérisé en ce qu'**après l'interruption du processus de freinage selon l'étape b.3.2, le processus de freinage automatique selon b n'est à nouveau déclenché
- que lorsque l'accélération transversale a_{Q} a encore augmenté et se situe autour d'une valeur définie au-dessus de l'accélération transversale critique a_{QKRIT},
- ou que lorsque le véhicule (10) a parcouru une distance définie depuis le dernier processus de freinage selon b et que l'accélération transversale a_{Q} est encore plus importante que l'accélération transversale critique a_{QKRIT}.
